# EUROPEAN PATENT APPLICATION

(11) **EP 4 059 900 A1**
(43) Date of publication of application: **21.09.2022**
(21) Application number: 20888014.6
(22) Date of filing: 14.10.2020
(51) Int. Cl.: C02F 1/44, B01D 61/12, B01D 61/10, B01D 61/22

(54) **LIQUID PURIFICATION SYSTEM**

(30) Priority: 12.11.2019 RU 2019136340
(71) Applicant: Electrophor, Inc., Woodmere, NY 11598 (US)
(72) Inventor: BOCHLIN, Alexander Izevich, Atlit (IL); SHMIDT, Joseph L., York New-Woodmere, 11598 (US)
(74) Representative: Danubia Patent & Law Office LLC
(86) International application number: PCT/RU2020/000538
(87) International publication number: WO 2021/096389

(57) **Abstract**

The invention relates to liquid purification and/or desalination systems, predominantly water from different sources, and is used in household and/or drinking water supply in suburb and country houses.

The liquid purification system comprises a raw liquid line with an inlet valve, a reverse osmosis membrane connected to a drainage line and a purified liquid line and a purified liquid consumption line and a purified liquid vessel, a secondary purified liquid line connected to the purified liquid vessel and to a raw liquid line and to a console panel, wherein debris layer on the reverse osmosis membrane is almost completely dissolved by intensive repeated flushing of the reverse osmosis membrane with purified liquid.

## Description

The invention relates to liquid purification and/or desalination systems, predominantly water from different sources, and is used in household and/or drinking water supply, in suburb and country houses.

Different liquid purification systems are well known and widely distributed.

The liquid purification system of international application WO 2002/055182 A1 (B01D 61/00, pub. 18.07.2002, Applicant Teknowsmartz Innovations/Technology Inc., Canada) is known from the state of the art. The system comprises raw liquid line with inlet valve and compressor, reverse osmosis membrane, connected to purified liquid line and liquid recirculation line with first recirculation pump. The drainage liquid line is connected to recirculation line before first recirculation pump. Purified liquid tank, second recirculation pump, purified liquid vessel and purified liquid supply line are mounted in series on purified liquid line. Purified liquid vessel is made as pressure tank. Secondary purified liquid line is connected to purified liquid line before purified liquid vessel. The outlet of secondary purified liquid line is connected to raw liquid line after the compressor. Liquid purification system of an application WO 2002/055182 works as follows. Raw liquid from the source flows along raw liquid line through inlet valve and compressor into the reverse osmosis membrane. Liquid is purified, and the drainage liquid flows to recirculation line and through recirculation pump returns to raw liquid line before inlet of reverse osmosis membrane. Purified liquid from reverse osmosis membrane flows into purified liquid tank or into purified liquid vessel or through purified liquid supply line goes to a consumer. When the liquid level in purified liquid tank reaches the maximum value, purification process stops, and the system turns to flushing mode. The compressor and two pumps are switched off, the inlet valve and the valve on recirculation line are closed. Then the valve on the secondary purified liquid line and the valve on the drainage liquid line open. Purified liquid for flushing is taken form the purified liquid vessel and flows along secondary purified liquid line to the raw liquid line, where it goes into the reverse osmosis, flushes it, then flows into the recirculation line and through drainage liquid line goes out from the system. When the level of the purified liquid in the purified liquid vessel becomes low, the circulation pump on the purified liquid line turns on, and purified liquid from the purified liquid tank is pumped into the purified liquid vessel, the flushing process in this moment still goes on. When in the tank purified liquid reaches the minimum predetermined value, the flushing process stops. The valve on the secondary purified liquid line and the valve on drainage liquid line are turned off, the compressor, first and second circulation pumps are turned on, inlet valve and valve on recirculation line are opened, the new liquid purification circle begins.

The main drawback of the liquid purification system of the application WO 2002/055182 is inefficient utilization of purified liquid for flushing. During flushing purified liquid flows along many lines and elements of the system and so the purified liquid pressure decreases, and it weakens the flushing. Also, there is no recirculation of purified liquid, and that this increases the amount of purified liquid for flushing. So, to flush the reverse osmosis membrane totally, it is necessary to flush the system with the volume of purified liquid comparable with the volume of purified liquid vessel together with the volume of purified liquid tank.

The liquid purification system of a patent RU 2614287 (C02F 1/44, priority. 02.09.2015, applicant Aquaphor Inc.), is known form the state of the art. Liquid purification system includes raw liquid line, with the inlet valve and compressor. The raw liquid and drainage mixing line is connected to raw liquid line and to raw liquid and drainage vessel (further vessel). The vessel consists of two cavities, separated from each other with flexible partition. Cavity, limited by flexible partition and inner wall of the vessel is for compressed medium (further displacing cavity), and cavity, limited by inner walls of flexible partition is for mixing of raw liquid and drainage (further collecting cavity). Besides raw liquid and drainage mixing line, the inlet of raw liquid and drainage mixture supply line is connected to vessel collecting cavity. This raw liquid and drainage mixture supply line is equipped with circulation pump, the outlet of this line is connected to inlet of reverse osmosis membrane. Recirculation line and purified liquid line are connected to reverse osmosis outlets. Drainage line equipped with the valve is connected to recirculation line. Recirculation line, in its' turn, through the t-socket is connected to raw liquid and drainage line mixing line and to raw liquid line after compressor before the vessel. Purified liquid vessel and purified liquid supply line are connected to the purified liquid line. The system is equipped with console panel. Compressor, circulation pump and solenoid valves are connected to it.

System of a patent RU 2614287 works as follows. When the liquid purification system starts, raw liquid from the source flows along the raw liquid line where it goes through opened inlet valve and compressor. After that, raw liquid along raw liquid and drainage mixing line goes into collecting cavity of the vessel and then along raw liquid and drainage mixture supply line through circulation pump flows into reverse osmosis membrane, where liquid is purified. Purified liquid flows to the purified liquid line. Drainage along recirculation line returns into collecting cavity of the vessel. At the same time raw liquid in amount equivalent to obtained purified liquid continuous to flow along raw liquid line from the source into raw liquid and drainage mixing line, and further into the collecting cavity of the vessel, where mixing of raw liquid and drainage takes place. Due to operating compressor which under pressure supplies the liquid into collecting cavity, the pressure in the displacing cavity grows during liquid purification process. At regular intervals during liquid purification process by signal of console panel the valve on the drainage line opens. Due to the pressure, accumulated in the displacing cavity of the vessel the drainage along raw liquid and drainage mixture supply line goes through circulation pump at high velocity into reverse osmosis membrane and is discharged into drain. Concurrently polarization layer, which forms on the surface of liquid purification means due to concertation polarization is damaged. After draining, the valve on drainage line closes and liquid purification process goes on.

After the moment when purified liquid tank is full, the vessel is totally emptied. The console panel closes the inlet valve, turns off the compressor, opens drainage valve. Liquid from collecting cavity of the vessel along raw liquid and drainage mixture supply line flows into the circulation pump and through reverse osmosis goes to the drainage line and through the open valve flows out of the system. Then the system goes to flushing mode. The flushing is done with the raw liquid, it flows along raw liquid line through the compressor, then to collecting cavity and then along raw liquid and drainage mixture supply line into the circulation pump and through reverse osmosis goes to the drainage line and through the open valve flows out of the system. After the reverse osmosis flushing is done, the system stands still, till the liquid purification process begins.

The main drawback of the system of a patent RU 2614287 is that flushing of reverse osmosis is done with the mixture of raw liquid and drainage. It is not effective, as such mixture contains contaminates, which prevent to fully flush reverse osmosis membrane. Also, during flushing, despite flow velocity, contaminants may accumulate on the membranes surface.

Liquid purification system of a patent US 4629568 (B01D 13/00, priority 26.09.1983, applicant Kinetico, Inc, USA), chosen as the closest analogue. The system includes raw liquid line, with the inlet valve, console panel, reverse osmosis membrane, connected to drainage line and to purified liquid line, which is divided to purified liquid supply line into the purified liquid tank and purified liquid consumption line. Also, the system contains secondary purified liquid line, connected to purified liquid supply line in the purified liquid vessel and to raw liquid supply line before reverse osmosis membrane. The return valve is installed on the secondary purified liquid line. Regulation valve, flow regulator and pressure relief valve are installed on the drainage line. Inlet valve on raw liquid supply line and valve on the drainage valve are connected with console panel.

System of a patent US4629568 works as follows. If there is no liquid in the purified liquid vessel, the signal from the console panel closes the regulation valve on drainage line and simultaneously opens inlet valve on the raw liquid supply line, and raw liquid flows along this line to the reverse osmosis membrane, where the liquid is purified. If the purified liquid for consumption line is closed, purified liquid flows to purified liquid vessel. While the purified water flows into the vessel, the pressure inside the vessel grows. When the pressure reaches the predetermined value, console panel closes the inlet valve on the raw liquid line and simultaneously opens the regulation valve on drainage line. The drainage liquid flows out of the system - the system goes into flushing mode. Due to pressure difference before and after pressure relief valve on the drainage line, the liquid remained in the reverse osmosis membrane flows out. As the inlet valve on the raw liquid line is closed, the liquid flowing out of the reverse osmosis membrane, is equalized by the volume of the liquid, flowing out of the purified liquid vessel, which flows along the secondary purified liquid supply line into the reverse osmosis membrane, flushing it. And then flushing liquid (purified liquid after flushing the membrane) goes out to drain.

The drawback of the given system is the lack of recirculation line, which leads to highly raw liquid and purified liquid consumption. Also, during flushing in the system of a patent US4629568 the pressure difference is the driving force but it cannot provide high flowing velocity of the purified liquid through reverse osmosis membrane, making the flushing lee effective, as due to the low speed, the layer of debris cannot be flushed form the membrane.

Object of the invention and the technical result achieved when using the invention is development of new liquid purification system, decrease of liquid consumption, used during flushing with simultaneous increase of flushing effectiveness.

Problem to be solved and technical result are achieved by that liquid purification system, comprising of raw liquid line with the inlet valve, reverse osmosis membrane connected to drainage line and purified liquid line and purified liquid consumption line and purified liquid vessel, secondary purified liquid line, connected to purified liquid vessel and to raw liquid line and to console panel, characterized in that debris layer on the reverse osmosis membrane is almost completely dissolved by intensive repeated flushing of the reverse osmosis membrane with purified liquid, where the number of flushings within one flushing cycle is not less than two but not more than six, predominantly four times, and includes recirculation line, equipped with the valve and connected to raw liquid line before circulation pump on the raw liquid line before reverse osmosis membrane.

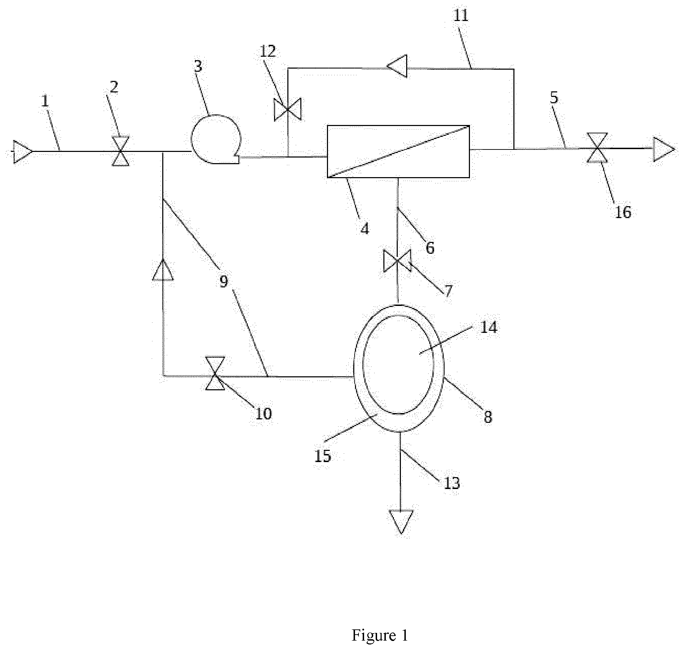

Figure 1 shows the liquid purification system.

The liquid purification system comprises raw liquid line 1 with inlet valve 2 and circulation pump 3, installed consequently, reverse osmosis membrane 4, purified liquid line 6, equipped with the valve 7 and purified liquid vessel 8, purified liquid consumption line 13, drainage line 5, equipped with the valve 16, secondary purified liquid line 9, equipped with the valve 10, recirculation line 11 with the valve 12, and console panel (not presented on the figures). Raw liquid line 1 is connected to inlet of reverse osmosis membrane 4. Purified liquid line 6, equipped with the valve 7 and purified liquid vessel 8 are connected to purified liquid reverse osmosis membrane outlet. Recirculation line 11 and drainage line 5 are connected to reverse osmosis membrane drainage outlet. Recirculation line 11 with the valve 12 is connected to raw liquid line 1 after inlet valve 2 before circulation pump 3. Purified liquid consumption line 13 and secondary purified liquid line 9 with the valve 10, with the outlet connected to raw liquid line 1 after inlet valve 2 before circulation pump 3 are connected to purified liquid vessel 8 (figure 1). Inlet valve 2, circulation pump 3, valves 7, 12 and 16 are operatively connected to console panel (not shown on the figure).

Purified liquid vessel 8 is, but not limited to, the vessel with two cavities, separated with the flexible partition (not shown on the figure). Purified liquid cavity 14 is defined by inner walls of the flexible partition. Compressible medium cavity 15 is defined by inner walls of the purified liquid vessels 8 body and outer walls of the flexible partition (not shown on the figures). Cavity 15 is filled with compressible medium, for example, but not limited to air, inert gas, or raw liquid. In this case raw liquid line 1 goes through compressible medium cavity 15 and recirculation line 11 is connected to raw liquid line before purified liquid vessel 8. Also purified liquid vessel 8 may be made as pressure tank or gravity tank, equipped with booster pump.

Additionally, the system may contain one or more collecting vessel, one or more drainage vessel, pressure creating means, flow restrictors, elements for preliminary cleaning of the liquid, i.e. prefilters, elements for conditioning and/or mineralization of the liquid, i.e. postfilters, liquid sterilization means, dispensing means for antiscalant and/or other additives, monitors and other.

Within features of the invention, the liquid purification system works as follows.

Raw liquid under pressure flows along raw liquid line 1 through open inlet valve 2 into circulation pump 3 to the inlet of the reverse osmosis membrane 4, where liquid is purified. Purified liquid flows to the purified liquid line 6 and through open valve 7 flows into purified liquid cavity 14 of purified liquid vessel 8 and/or purified liquid consumption 13. While the purified liquid cavity 14 is filled with purified liquid, pressure in the compressible medium cavity 15 is growing. When the purified liquid vessel 8 is made as pressure tank, purified liquid flows into the vessel and the pressure inside it grows. During purification process the valve 16 is closed, so the drainage flows out of the reverse osmosis membrane 4 along recirculation line 11 and returns on the raw liquid line.

When the predetermined level of purified liquid in the cavity 14 is reached, console panel closes inlet valve 2 and valve 7. The system goes into the flushing mode. For short time console panel opens valve 16 and drainage which is left in the system flows out along the drainage line 5. After predetermined short period of time console panel closes the valve 16. So only valves 10 and 12 are opened. As the valve 2 on the raw liquid line 1 is closed pressure on raw liquid line decreases, as there is no raw liquid under pressure. At the same time purified liquid in the vessel 8 is under pressure. Due to this pressure portion of purified liquid flows along secondary purified liquid line 9 through opened valve 10 to raw liquid line 1. When portion of the purified liquid flows out of the vessel 8 to the raw liquid line, pressure in the vessel 10 decreases and this prevents leakage of more liquid. The flushing is done in the following way - portion of purified liquid along raw liquid line 1 through circulation pump 3, which increases purified liquid flow velocity flows into the inlet of the reverse osmosis membrane 4. As valves 16 and 7 are closed, liquid after reverse osmosis membrane 4 flows to the recirculation line 11 and through opened valve 12 returns raw liquid line 1. After purified liquid has filled the reverse osmosis membrane 4 and recirculation line 11, console panel closes valve 10. So only valve 12 remains opened. Part of the raw liquid line 1 from inlet valve 2 to reverse osmosis membrane 4, including circulation pump 3, reverse osmosis membrane 4 and recirculation line 11 form the flushing closed circuit. Liquid inside this circuit passes it not less than two, but not more than six times, predominantly four times. The flow velocity remains high. After it console panel opens the valve 16 on the drainage line 5 and flushing liquid flows out of the system, additionally washing out the debris which are left in lines.

Against the closest analogue due to that circulation pump 3 keeps working, liquid inside the circuit has more stable flow velocity. Due to high velocity liquid several times passes the reverse osmosis membrane 4, providing effective flushing. So, such effective flushing is done with the relatively small amount of liquid - the effectiveness of flushing increases, the purified liquid consumption decreases. Also due to stable pressure in the circuit reverse osmosis membrane 4 does not undergo hydraulic shock, and that increases its operational life.

In the description of the invention the preferable embodiment is given. The invention maybe changed, but within the limits of the present claims. This gives the possibility of its common use.

## Claims

1. A liquid purification system, comprising of a raw liquid line with an inlet valve, a reverse osmosis membrane connected to a drainage line and a purified liquid line and a purified liquid consumption line and a purified liquid vessel, a secondary purified liquid line connected to the purified liquid vessel and to a raw liquid line and to a console panel, **characterized in that** debris layer on the reverse osmosis membrane is almost completely dissolved by intensive repeated flushing of the reverse osmosis membrane with purified liquid.

2. The liquid purification system according to claim 1, **characterized in that** the number of flushings within one flushing cycle is not less than two but not more than six, predominantly four times.

3. The liquid purification system according to claim 1, **characterized in that** said system further comprises a recirculation line equipped with a valve connected to the raw liquid line before a circulation pump in the raw liquid line before the reverse osmosis membrane.
